# EUROPEAN PATENT APPLICATION

(11) **EP 4 545 456 A1**
(43) Date of publication of application: **30.04.2025**
(21) Application number: 23826294.3
(22) Date of filing: 16.06.2023
(51) Int. Cl.: B65G 47/82

(54) **BIOCHIP MOVING APPARATUS**

(30) Priority: 24.06.2022 CN 202210728755
(71) Applicant: Shen Zhen Biorocks Biotechnology Company Limited, Shenzhen, Guangdong 518000 (CN)
(72) Inventor: WEN, Li, Shenzhen, Guangdong 518110 (CN); CHAN, Ho Nam, Hong Kong (CN)
(74) Representative: Grey, Ian Michael
(86) International application number: PCT/CN2023/100713
(87) International publication number: WO 2023/246645

(57) **Abstract**

Disclosed in the present invention is a biochip moving device. The biochip moving device includes a rack, on which at least one operating unit for pushing a biochip to move is arranged, a driving mechanism, a chip pushing mechanism and a biochip are respectively provided on each of the operating units, the driving mechanism is provided on the lower part of the rack, the biochip moving device and the biochip are respectively provided on the upper part of the rack, the chip pushing mechanism is driven by and connected to the driving mechanism, the chip pushing mechanism pushes the biochip to a target position. Compared with traditional manual vitrification freezing operations, the present invention greatly improves work efficiency and is easy for users to operate through adopting connecting rod pushing biochip, and the connecting rod is driven by motor. The present invention prevents jolts during the biochip moving process through providing pressing plate assembly, the encapsulation of the rolling bars of the pressing plate assembly makes the chip moving more smoothly. The present invention also has the characteristics of simple device structure and low cost.

## Description

### TECHNICAL FIELD

The invention relates to bioengineering field, in particular to a biochip moving device.

### BACKGROUND

When using an automated ovum/embryo vitrification freezing operation platform, after placing an ovum/embryo onto a corresponding carrier, a robotic arm of the automated ovum/embryo vitrification freezing operation platform sequentially releases and aspirates different chemicals placed in biochips to base solutions where the ovum/embryo is located within a specified time according to the pre-set program settings and action positioning, thereby achieving automated operation of the process. The prior art of the automated ovum/embryo vitrification freezing operation platform usually use robotic arms for the retrieval and placement of biochips, resulting in high costs, difficult operations and low accuracy, which is not propitious to be generalized for use and to have the cost of ovum/embryo freezing reduced.

### SUMMARY

To sum up, the invention is mainly for providing a fully automated operating biochip moving device so as to resolve at least one of the problems (deficiencies) of the prior art described above.

A biochip moving device is disclosed in the present invention. The device comprises a rack, on which at least one operating unit for pushing a biochip to move is arranged. A driving mechanism, a chip pushing mechanism and a biochip are respectively provided on each of the operating units. The driving mechanism and the chip pushing mechanism are respectively provided in the rack. The chip pushing mechanism which connecting to the driving mechanism, pushes the biochip to a target position.

The rack comprises a baseplate, a plurality of supporting baffles, a chute plate and a front-panel, which are sequentially arranged from the bottom up. The plurality of supporting baffles are fixedly and alternately arranged between the baseplate and the chute plate, respectively, and the front-panel is fixedly arranged above the chute plate.

The driving mechanism is selected from one of a screw driving mechanism, a rack and pinion mechanism, a hinge mechanism, and a pneumatic-hydraulic mechanism or a combination thereof.

An edge of the chute plate is provided with a gap.

The chip pushing mechanism comprises a slider bracket and a hinge assembly. A bottom part of the slider bracket is fixedly connected to a movable end of the driving mechanism, and an upper part of the slider bracket is rotatably connected to the hinge assembly.

The slider bracket is configured as an I-shape and comprises a sliding seat connecting part, an orientating part (or a positioning part) and a hinge connecting part. The sliding seat connecting part is fixedly connected to the movable end of the driving mechanism, the orientating part being located in the gap of the chute plate, two side walls of which extending outwardly constitute the configuration of the hinge connecting part.

The size of the orientating part is smaller than the width of the gap.

An end part of the hinge connecting part is provided with a first projection for being matched the hinge assembly.

The chute plate of each of the operating units is provided with a set of symmetrically arranged first chutes and second chutes.

The first chute and the second chute are configured as one of arc, trapezoidal, annular, linear and special shapes or a combination thereof.

The first chute is provided with a first position and a second position for determining a starting position of a movement of a slider.

The second chute is provided with a third position and a fourth position for determining a target position of a movement of a slider.

A fifth position and a sixth position for positioning initial and target positions of the slider bracket are provided within the gap.

The hinge assembly comprises a double-ring connecting rod and a slide bar, which are rotationally connected with each other.

A second projection is provided at the junction of a long side and a short side of the slide bar, upper and lower surfaces of the other end of the long side of the slide bar are provided with a third projection and a fourth projection, respectively, said fourth projection is slidably connected to the first chute, and the second projection is slidably connected to the second chute.

The double-ring connecting rod comprises a body and connecting rings arranged at both ends of the body, one of the connecting rings of the double-ring connecting rod is rotationally connected to the first projection of the hinge connecting part, and the other connecting ring of the double-ring connecting rod is rotationally connected to the third projection of the slider bracket.

Wherein the first position and the third position are defined as starting positions of the fourth projection and the second projection, respectively; the second position and the fourth position are defined as target positions to be moved to of the fourth projection and the second projection, respectively; and the fifth position and the sixth position are defined as a starting position and a target position of the slider bracket moving within the gap.

When the driving mechanism drives the slider bracket located at the fifth position to move towards the sixth position, the slider bracket drives the second projection and the fourth projection located at the first position and the third position on the slide bar through the double-ring connecting rod connected thereto to move to the second position and the fourth position, so that the short side of the slide bar pushes the biochip to the target position.

The driving mechanism drives the slider bracket located at the sixth position to move towards the fifth position, the slider bracket drives the second projection and the fourth projection located at the second position and the fourth position on the slide bar through the double-ring connecting rod connected thereto to move to the first position and the third position.

A pressing plate assembly for positioning the biochip is further arranged on the front-panel, including a pressing plate and a plurality of rolling bars which are rotatably mounted at a bottom of the pressing plate, respectively.

A hanging stand is respectively provided at each of two side walls of the biochip for matching and connecting with the slider bracket.

A substrate inlet and outlet mechanism for automatic inlet and outlet of a substrate is further arranged on the front-panel.

An arc-shaped convexity located adjacent to the target position is arranged on the front-panel, and both sides of convexity are further respectively provided with a positioning groove.

The substrate inlet and outlet mechanism comprises a motor, a motor mounting bracket, a panel connecting bracket, a gear plate, a gear, a substrate positioning plate and a substrate as well. The motor mounting bracket is fixedly connected to the panel connecting bracket, the motor is mounted on the motor mounting bracket and located between the motor mounting bracket and the panel connecting bracket, the gear is rotatably arranged at an output end of the motor, the gear is movably connected to the gear plate, one side of the substrate positioning plate is fixedly connected to the gear plate, and, the other side of the substrate positioning plate is detachably connected to the substrate.

The positioning groove is provided with a seventh position for determining a starting position of a movement of the gear plate and an eighth position for determining a target position of the movement of the gear plate.

The gear plate is provided with toothed racks in a lengthwise direction.

The toothed racks of the gear plate engage with the gear, and when the motor drives the gear to rotate counterclockwise, the gear drives the gear plate and the substrate positioning plate and the substrate connected thereto to move from the seventh position to the eighth position, respectively; and when the motor drives the gear to rotate clockwise, the gear drives the gear plate and the substrate positioning plate and the substrate connected thereto to move from the eighth position to the seventh position, respectively.

The substrate positioning plate comprises a body, a fixing slot at one end of the body, and an L-shaped bend at the other end of the body, the fixing slot is adaptively connected with the arc-shaped convexity of the front-panel, and the L-shaped bend stand up to one end of the gear plate.

The substrate positioning plate is further symmetrically provided with two stoppers for positioning the substrate.

The gear plate is fixedly connected to the substrate positioning plate by screws penetrating through the positioning groove.

The device further comprises an optical system which is provided at a bottom part of the rack, the optical system comprises a light source module, an objective lens, an optical assembly, a camera and a lifting module with a movable end connected to the optical assembly which is located at a bottom part of the optical system for driving the optical assembly upward and downward to adjust a focal length. The objective lens and the camera are arranged at a light inlet and outlet of the optical assembly, respectively. The objective lens is configured to collect and magnify an optical image of the embryo/ovum, and the light source module is fixed on a chassis and located directly above the objective lens.

The light source module and the objective lens are coaxial.

The optical assembly comprises a first reflecting mirror fixing box, a first reflecting mirror, , a tube mirror, a first fixing tube of tube mirror, a second fixing tube of tube mirror, a second reflecting mirror fixing box, a second reflecting mirror and a camera adapter, a longitudinal open end of the first reflecting mirror fixing box is a light inlet and a transverse open end thereof is a light outlet; and a transverse open end of the second reflecting mirror fixing box is a light inlet and a longitudinal open end thereof is a light outlet.

The first reflecting mirror is fixed in the first reflecting mirror fixing box and located directly below the objective lens and at an angle of 45 degrees to the objective lens.

The first reflecting mirror fixing box is in threaded connection with the objective lens located above the same.

The first fixing tube and the other end of the second fixing tube are connected through threads.

The tube mirror is coaxial with the first fixing tube and the second fixing tube, respectively, the tube mirror is arranged at an internal juncture of the first fixing tube and the second fixing tube, and the tube mirror is configured to image the optical image collected by the objective lens onto a photosensitive element of the camera.

One end of the camera adapter is provided with an external thread, the other end thereof is provided with an annular groove, the second reflecting mirror fixing box with two threaded holes for fixing the camera adapter is fastened to the annular groove of the camera adapter, and the camera is located directly above the camera adapter and in threaded connection with the camera adapter.

The second reflecting mirror is fixed in the second reflecting mirror fixing box, the second reflecting mirror is at an angle of 45 degrees to center axes of the first fixing tube and the second fixing tube, respectively, and the second reflecting mirror is configured to reflect an optical signal onto the photosensitive element of the camera located above.

The light source module comprises an LED light source, an LED fixing seat, a diffusion sheet, a lens, a diffusion sheet mounting frame and a light source module fixing frame. The LED fixing seat and the light source module fixing frame are fixedly connected, the LED light source is mounted on a top part of the LED fixing seat. The lens, the diffusion sheet mounting frame and the diffusion sheet are arranged sequentially from bottom to top between the LED fixing seat and the light source module fixing frame. The lens is inserted to a lens mounting hole in the light source module fixing frame to match the lens mounting hole. The diffusion sheet is arranged on a concave surface of a top part of the diffusion sheet mounting frame.

By adopting the above technical solutions, compared with the prior art, the beneficial effects generated by the present invention are that: compared with traditional manual vitrification freezing operations, the present invention greatly improves work efficiency and is easy for users to operate through adopting connecting rod pushing biochip, and the connecting rod is driven by motor. The present invention prevents jolts during the biochip moving process through providing pressing plate assembly, the encapsulation of the rolling bars of the pressing plate assembly makes the chip moving more smoothly. The present invention also has the characteristics of simple device structure and low cost.

### BRIEF DESCRIPTION OF THE DRAWINGS

Fig. 1 is a stereoscopic schematic diagram of a whole structure of the invention.
Fig. 2 is a stereoscopic schematic diagram of another whole structure of the invention.
Fig. 3 is a schematic diagram of a chip pushing mechanism of the invention.
Fig. 4 is a schematic diagram of a slider bracket of the invention.
Fig. 5 is a schematic diagram of a chute plate of the invention.
Fig. 6 is enlarged partial views of Fig. 5.
Fig. 7 is a schematic diagram of a hinge assembly of the invention.
Fig. 8 is a schematic diagram of a slider bracket of the invention.
Fig. 9 is a schematic diagram of a double-ring connecting rod of the invention.
Fig. 10 is a schematic diagram of a pressing plate assembly of the invention.
Fig. 11 is a schematic diagram of a biochip of the invention.
Fig. 12 is a schematic diagram of a substrate inlet and outlet mechanism of the invention.
Fig. 13 is a schematic diagram of a panel of the invention.
Fig. 14 is a schematic diagram of a substrate inlet and outlet mechanism of the invention.
Fig. 15 is a schematic diagram of a gear plate of the invention.
Fig. 16 is a schematic diagram of a substrate positioning plate of the invention.
Fig. 17 is a schematic diagram of the whole structure of an optical system of the invention.
Fig. 18 is a schematic diagram of an optical assembly of the invention.
Fig. 19 is an optical path diagram of an optical system of the invention.
Fig. 20 is a schematic diagram of a camera adapter of the invention.
Fig. 21 is a decomposition diagram of partial structures of a light source module of the invention.
Fig. 22 is a schematic cross-sectional view of a light source module of the invention.
Fig. 23 is a schematic diagram of a chassis of the invention.
Fig. 24 is a schematic diagram of another chassis of the invention.

### DETAILED DESCRIPTION

The following embodiments are further explanations and supplements to the present invention and do not constitute any limitations on the present invention.

The technical solution of the present invention will be further explained in conjunction with the drawings and embodiments.

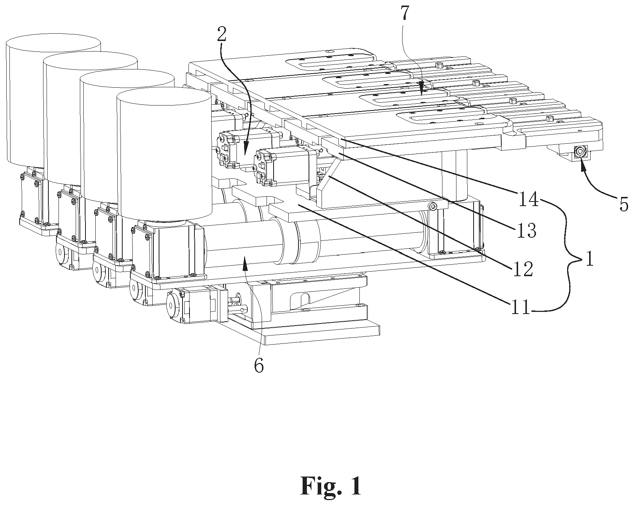

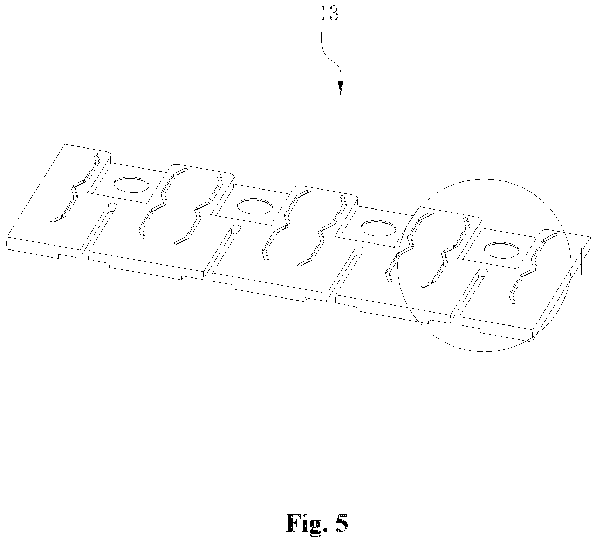

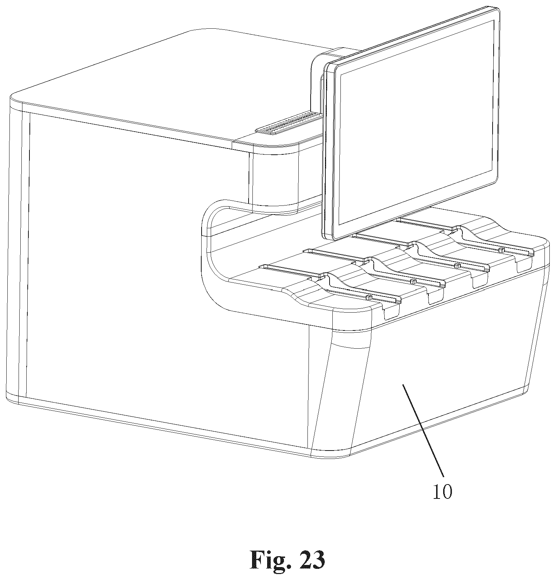

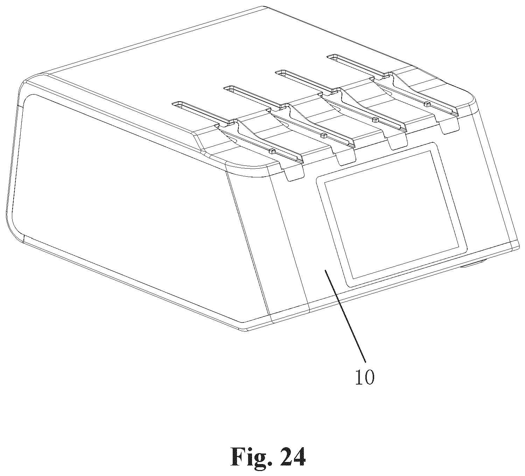

As shown in Figs. 1-16, 23 and 24, the device in the present invention comprises a rack 1, on which at least one operating unit for pushing a biochip to move is arranged, the rack and each operating units are both set in the chassis 10. A driving mechanism 2, a chip pushing mechanism 3 and a biochip 4 are respectively provided on each of the operating units. The driving mechanism 2 and the chip pushing mechanism 3 are respectively provided in the rack 1. The chip pushing mechanism 3 which connecting to the driving mechanism 2 pushes the biochip 4 to a target position. In this embodiment, as shown in Fig. 23, the chassis 10 is equipped with a LCD display screen to show relevant parameters. In other embodiments, as shown in Fig. 24, the LCD display screen can also be omitted from the chassis 10 to simplify the structure.

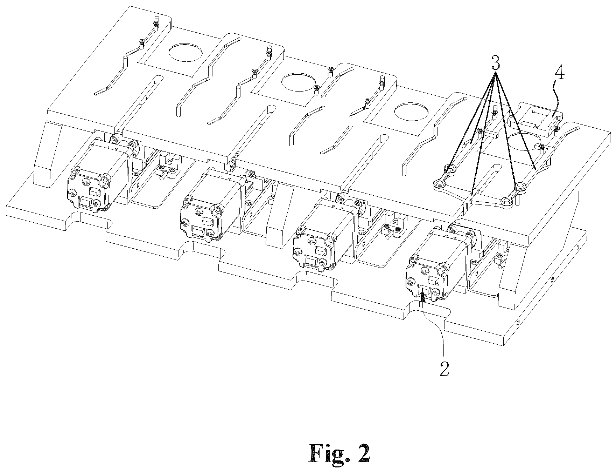

As shown in Figs. 1 and 2, specifically, the rack 1 comprises a baseplate 11, a plurality of supporting baffles 12, a chute plate 13 and a front-panel 14, which are sequentially arranged from the bottom up. The plurality of supporting baffles 12 are fixedly and alternately arranged between the baseplate 11 and the chute plate 13, respectively, and the front-panel 14 is fixedly arranged above the chute plate 13.

Furthermore, the driving mechanism 2 is selected from one of a screw driving mechanism, a rack and pinion mechanism, a hinge mechanism, and a pneumatic-hydraulic mechanism or a combination thereof.

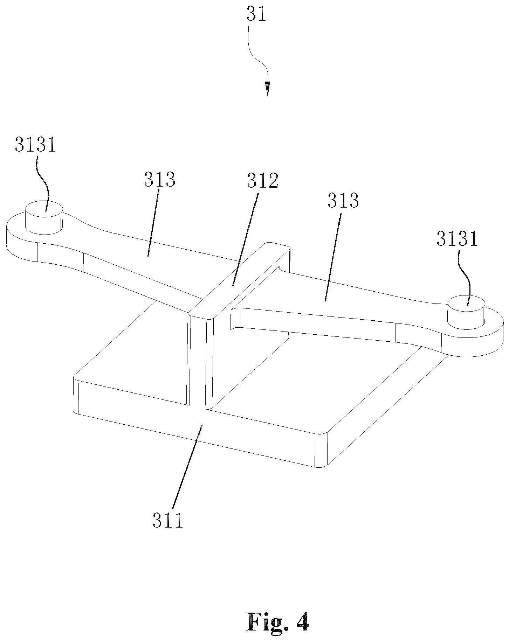

As shown in Fig. 4, furthermore, an edge of the chute plate 13 is provided with a gap 131.

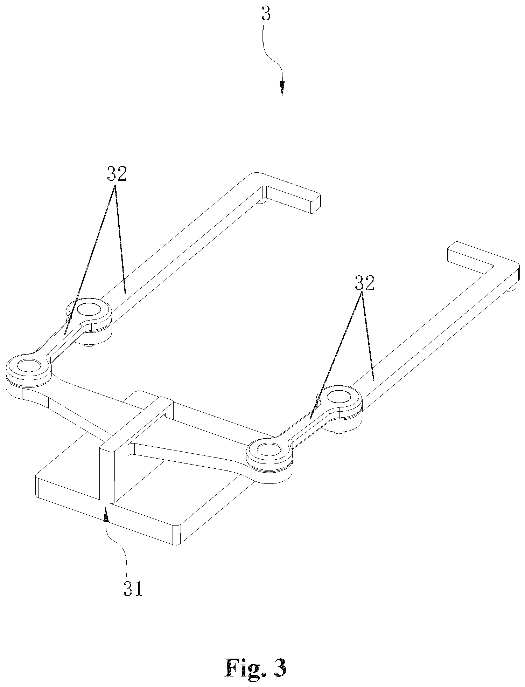

As shown in Fig. 3, specifically, the chip pushing mechanism 3 comprises a slider bracket 31 and a hinge assembly 32. A bottom part of the slider bracket 31 is fixedly connected to a movable end of the driving mechanism 2, and an upper part of the slider bracket 31 is rotatably connected to the hinge assembly 32.

As shown in Fig. 4, specifically, the slider bracket 31 is configured as an I-shape and comprises a sliding seat connecting part 311, an orientating part (or a positioning part) 312 and a hinge connecting part 313. The sliding seat connection part 311 is configured as a plate-shape, and is fixedly connected to the movable end of the driving mechanism 2, the orientating part 312 being located in the gap 131 of the chute plate, two side walls of which extending outwardly constitute the configuration of the hinge connecting part 313.

As shown in Fig. 4, furthermore, an end part of the hinge connecting part 313 is provided with a first projection 3131 for being matched the hinge assembly 32.

The size of the orientating part 312 is smaller than the width of the gap 131.

The first chute 132 and the second chute 133 are configured as one of arc, trapezoidal, annular, linear and special shapes or a combination thereof.

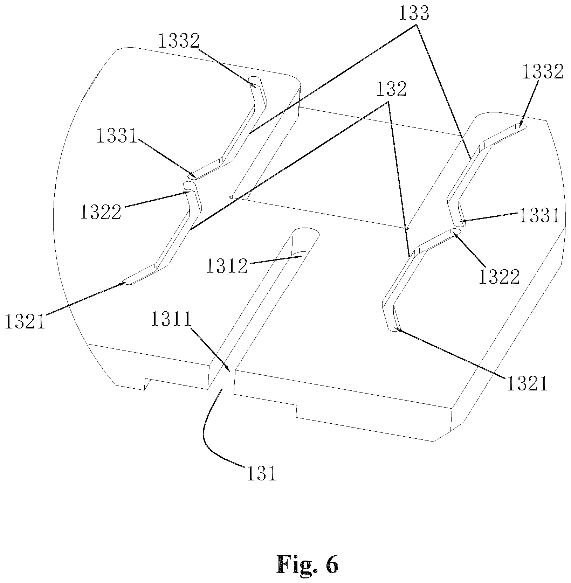

As shown in Fig. 6, furthermore, the chute plate 13 of each of the operating units is provided with a set of symmetrically arranged first chutes 132 and second chutes 133.

As shown in Fig. 6, furthermore, the first chute 132 is provided with a first position 1321 and a second position 1322 for determining a starting position of a movement of a slider.

As shown in Fig. 6, furthermore, the second chute 133 is provided with a third position 1331 and a fourth position 1332 for determining a target position of a movement of a slider.

As shown in Fig. 6, furthermore, a fifth position 1311 and a sixth position 1312 for positioning initial and target positions of the slider bracket 31 are provided within the gap 131.

As shown in Fig. 2, the first position 1321 and the third position 1331 are defined as starting positions of the fourth projection 3223 and the second projection 3221, respectively; the second position 1322 and the fourth position 1332 are defined as target positions to be moved to of the fourth projection 3223 and the second projection 3221, respectively, and the fifth position 1311 and the sixth position 1312 are defined as a starting position and a target position of the slider bracket 31 moving within the gap 131.

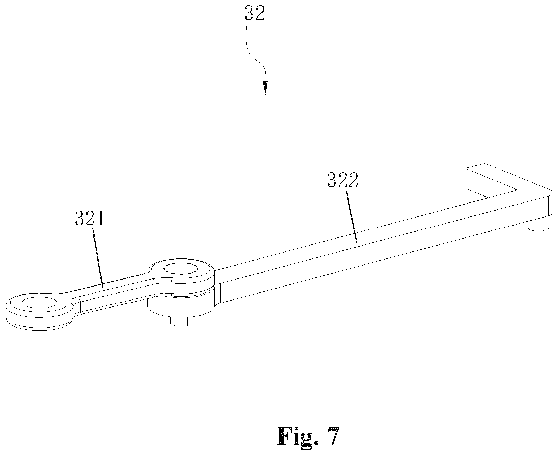

As shown in Fig. 7, the hinge assembly 32 comprises a double-ring connecting rod 321 and a slide bar 322, which are rotationally connected with each other.

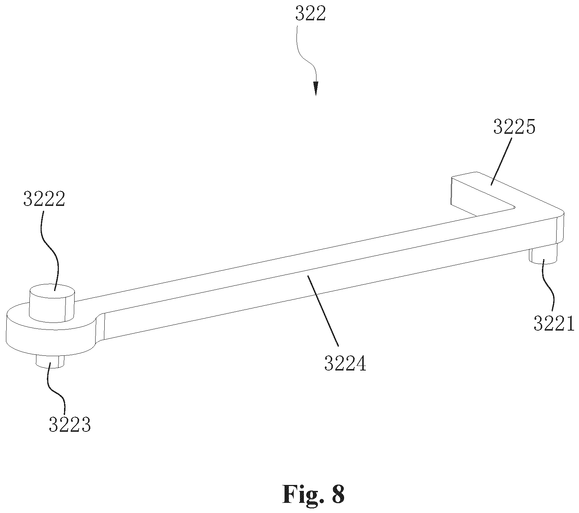

As shown in Fig. 8, specifically, the slide bar 322 is configured as an L-shape bar. A second projection 3221 is provided at the junction of a long side 3224 and a short side 3225 of the slide bar 322, upper and lower surfaces of the other end of the long side 3224 of the slide bar are provided with a third projection 3222 and a fourth projection 3223, respectively, said fourth projection 3223 is slidably connected to the first chute 132, and the second projection 3221 is slidably connected to the second chute 133.

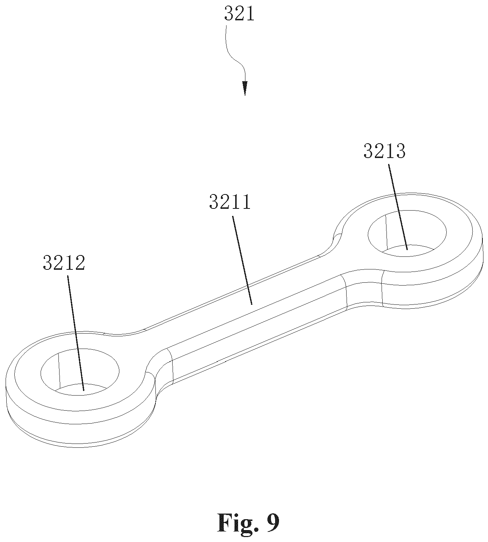

As shown in Fig. 9, specifically, the double-ring connecting rod 321 comprises a body 3211 and connecting rings 3212, 3213 arranged at both ends of the body, one of the connecting rings 3212 of the double-ring connecting rod 321 is rotationally connected to the first projection 3131 of the hinge connecting part, and the other connecting ring 3213 of the double-ring connecting rod is rotationally connected to the third projection 3222 of the slider bracket.

In this embodiment, when the driving mechanism 2 drives the slider bracket 31 located at the fifth position 1311 to move towards the sixth position 1312, the slider bracket 31 drives the second projection 3221 and the fourth projection 3223 located at the first position 1321 and the third position 1331 on the slide bar 322 through the double-ring connecting rod 321 connected thereto to move to the second position 1322 and the fourth position 1332, so that the short side 3225 of the slide bar 322 pushes the biochip 4 to the target position. The driving mechanism drives the slider bracket 31 located at the sixth position 1312 to move towards the fifth position 1311, the slider bracket 31 drives the second projection 3221 and the fourth projection 3223 located at the second position 1322 and the fourth position 1332 on the slide bar through the double-ring connecting rod 321 connected thereto to move to the first position 1321 and the third position 1331. The chip pushing operation is performed through repeating the previous operation.

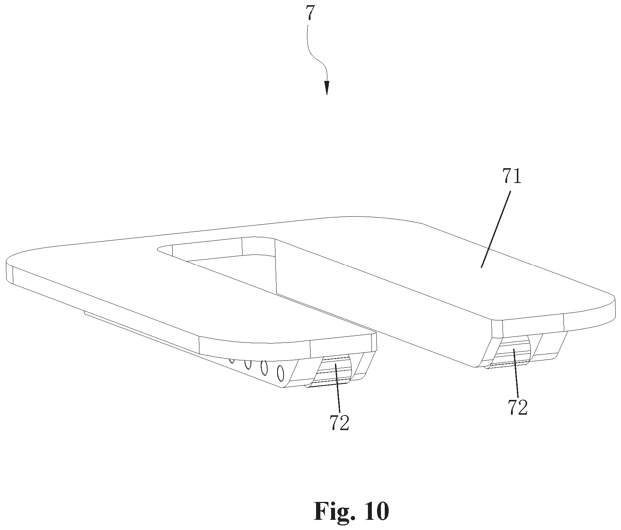

As shown in Fig. 10, furthermore, a pressing plate assembly 7 for positioning the biochip 4 is further arranged on the front-panel 14, including a pressing plate 71 and a plurality of rolling bars 72which are rotatably mounted at a bottom of the pressing plate 71, respectively. The present invention prevents jolts during the biochip moving process through providing pressing plate assembly, the encapsulation of the rolling bars of the pressing plate assembly makes the chip moving more smoothly.

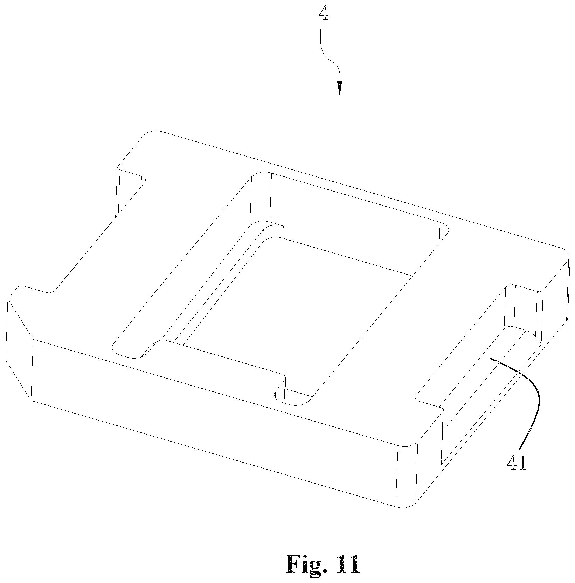

As shown in Fig. 11, furthermore, A hanging stand 41 is respectively provided at each of two side walls of the biochip 4 for matching and connecting with the slider bracket.

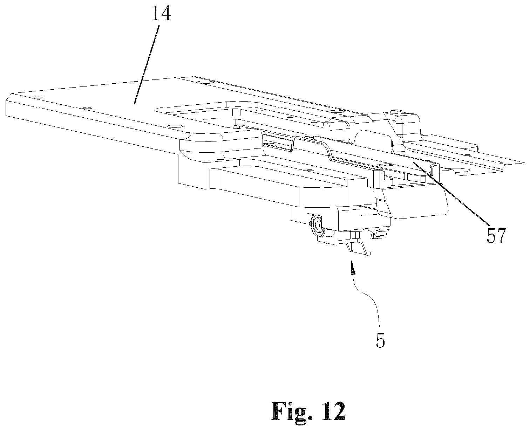

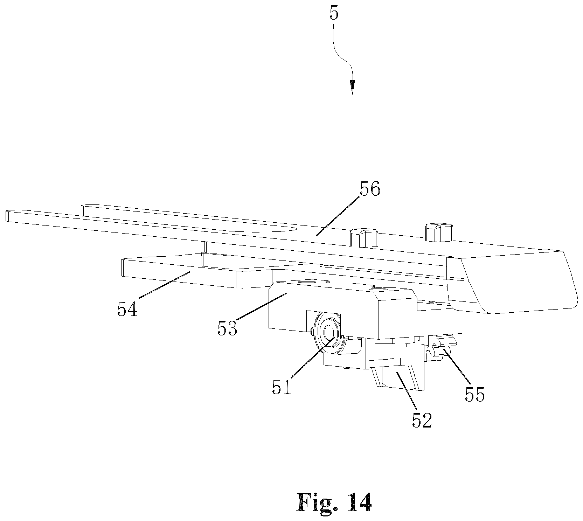

As shown in Figs. 12 and 14, in this embodiment, a substrate inlet and outlet mechanism 5 for automatic inlet and outlet of a substrate is further arranged on the front-panel 14.

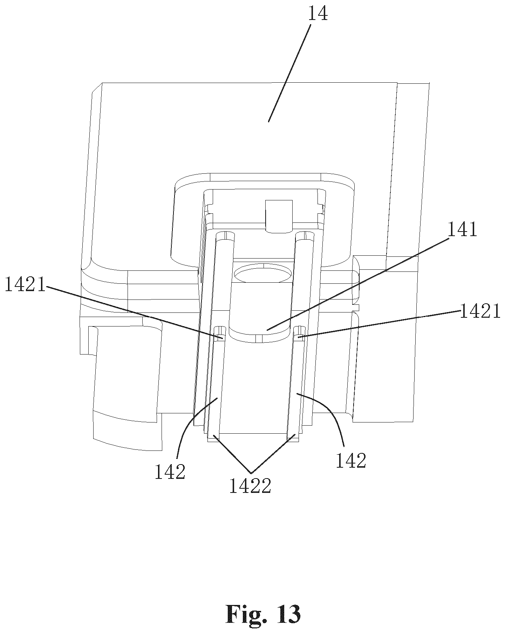

As shown in Fig. 13, an arc-shaped convexity 141 located adjacent to the target position is arranged on the front-panel 14, and both sides of the convexity 141 are further respectively provided with a positioning groove 142.

As shown in Fig. 14, specifically, the substrate inlet and outlet mechanism 5 comprises a motor 51, a motor mounting bracket 52, a panel connecting bracket 53, a gear plate 54, a gear 55, a substrate positioning plate 56 and a substrate 57 as well. The motor mounting bracket 52 is fixedly connected to the panel connecting bracket 53, the motor 51 is mounted on the motor mounting bracket 52 and located between the motor mounting bracket 52 and the panel connecting bracket 53, the gear 55 is rotatably arranged at an output end of the motor 51, the gear 55 is movably connected to the gear plate 54, one side of the substrate positioning plate 56 is fixedly connected to the gear plate 54, and, the other side of the substrate positioning plate 56 is detachably connected to the substrate 57.

As shown in Fig. 13, the positioning groove 142 is provided with a seventh position 1421 for determining a starting position of a movement of the gear plate 54 and an eighth position 1422 for determining a target position of the movement of the gear plate 54.

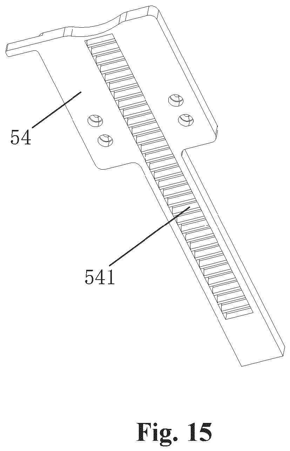

As shown in Fig. 15, the gear plate 54 is configured as a T-shape plate, the gear plate 54 is provided with toothed racks 541 in a lengthwise direction.

The toothed racks 541 of the gear plate engage with the gear 55, and when the motor drives the gear to rotate counterclockwise, the gear drives the gear plate and the substrate positioning plate and the substrate 57 connected thereto to move from the seventh position 1421 to the eighth position 1422, respectively; and when the motor drives the gear to rotate clockwise, the gear drives the gear plate and the substrate positioning plate and the substrate connected thereto to move from the eighth position 1422 to the seventh position 1421, respectively.

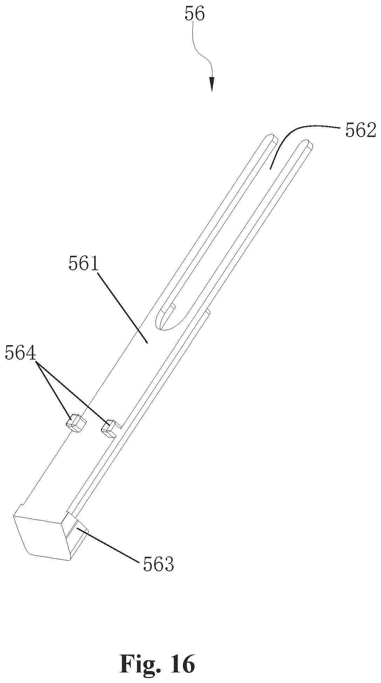

As shown in Fig. 16, the substrate positioning plate 56 comprises a body 561, a fixing slot 562 at one end of the body, and an L-shaped bend 563 at the other end of the body 561, the fixing slot 562 is adaptively connected with the arc-shaped convexity 141 of the front-panel, and the L-shaped bend 563 stand up to one end of the gear plate 54.

As shown in Fig. 16, furthermore, the substrate positioning plate 56 is further symmetrically provided with two stoppers 564 for positioning the substrate.

As shown in Figs. 13 and 14, the gear plate 54 is fixedly connected to the substrate positioning plate 56 by screws penetrating through the positioning groove 142.

As shown in Fig. 11, furthermore, a hanging stand 41 is respectively provided at each of two side walls of the biochip 4 for matching and connecting with the slider bracket.

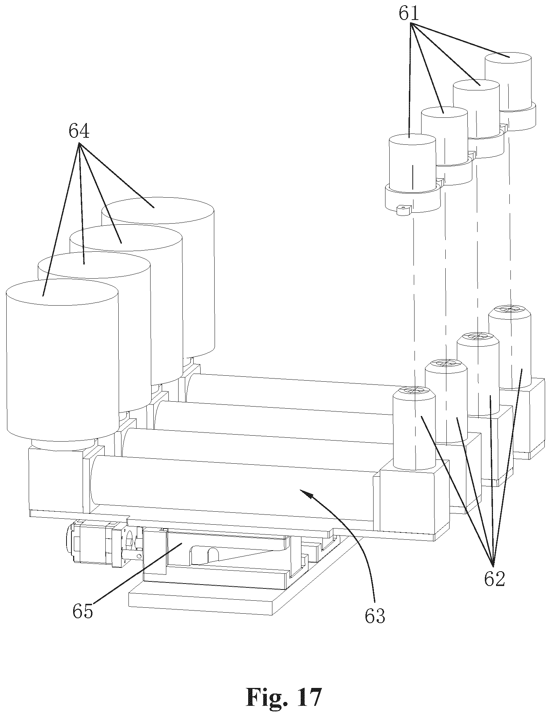

As shown in Figs. 1 and 17, the device further comprises an optical system which is provided at a bottom part of the rack, the optical system 6 comprises a light source module 61, an objective lens 62, an optical assembly 63, a camera 64 and a lifting module 65 with a movable end connected to the optical assembly which is located at a bottom part of the optical system for driving the optical assembly upward and downward to adjust a focal length. The objective lens 62 and the camera 64 are arranged at a light inlet and outlet of the optical assembly 63, respectively. The objective lens 62 is configured to collect and magnify an optical image of the embryo/ovum, and the light source module 61 is fixed on a chassis and located directly above the objective lens 62.

Furthermore, the light source module 61 and the objective lens 62 are coaxial.

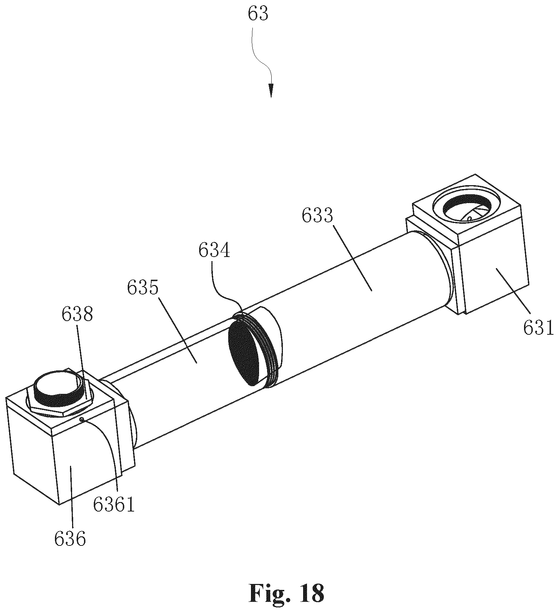

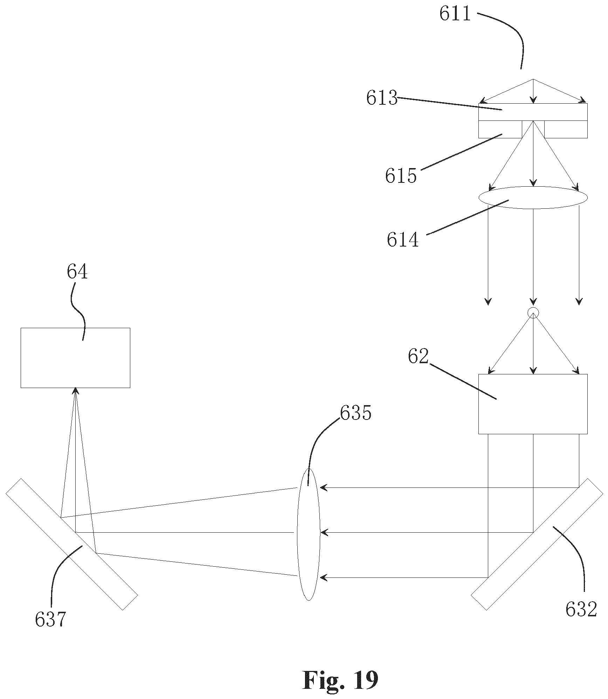

As shown in Figs. 18 and 19, the optical assembly 63 comprises a first reflecting mirror fixing box 631, a first reflecting mirror 632, a first fixing tube of tube mirror 633, a tube mirror 634, a second fixing tube of tube mirror 635, a second reflecting mirror fixing box 636, a second reflecting mirror 637 and a camera adapter 638, the tube mirror 634 is coaxial with the first fixing tube of tube mirror 633 and the second fixing tube of tube mirror 635, respectively, the tube mirror 634 is arranged at an internal juncture of the first fixing tube of tube mirror 633 and the second fixing tube of tube mirror 635, and the tube mirror 634 is configured to image the optical image collected by the objective lens onto a photosensitive element of the camera.

The first reflecting mirror 632 is fixed in the first reflecting mirror fixing box 631 and located directly below the objective lens 62 and at an angle of 45 degrees to the objective lens 62.

The first reflecting mirror fixing box 631 is in threaded connection with the objective lens 62 located above the same.

A longitudinal open end of the first reflecting mirror fixing box 631 is a light inlet and a transverse open end thereof is a light outlet; and a transverse open end of the second reflecting mirror fixing box 636 is a light inlet and a longitudinal open end thereof is a light outlet.

The first fixing tube of tube mirror 633 and the other end of the second fixing tube of tube mirror 635 are connected through threads.

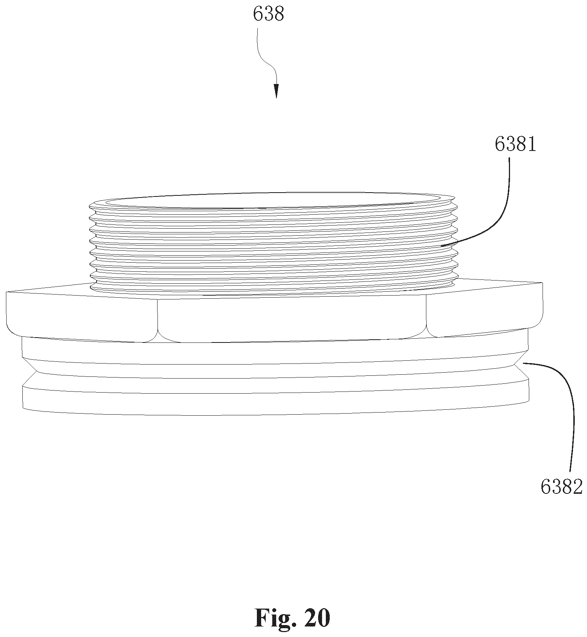

As shown in Figs. 18 and 20, one end of the camera adapter 638 is provided with an external thread 6381, the other end thereof is provided with an annular groove 6382, the second reflecting mirror fixing box 636 with two threaded holes 6361 for fixing the camera adapter is fastened to the annular groove 6382 of the camera adapter 638, and the camera 64 is located directly above the camera adapter 638 and in threaded connection with the camera adapter 638.

The second reflecting mirror 637 is fixed in the second reflecting mirror fixing box 636, the second reflecting mirror 637 is at an angle of 45 degrees to center axes of the first fixing tube of tube mirror 633 and the second fixing tube of tube mirror 635, respectively, and the second reflecting mirror 637 is configured to reflect an optical signal onto the photosensitive element of the camera located above.

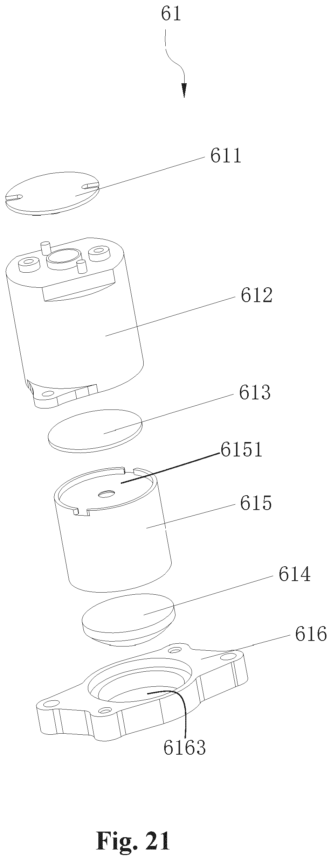

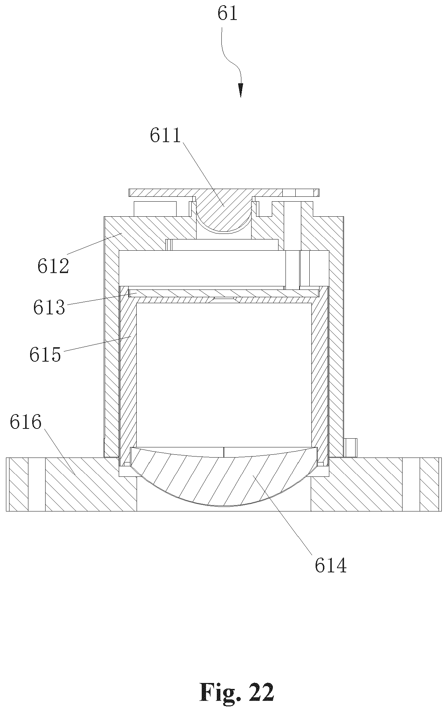

As shown in Figs. 21-23, the light source module 61 comprises an LED light source 611, an LED fixing seat 612, a diffusion sheet 613, a lens 614, a diffusion sheet mounting frame 615 and a light source module fixing frame 616. The LED fixing seat 612 and the light source module fixing frame 616 are fixedly connected, the LED light source 611 is mounted on a top part of the LED fixing seat 612. The lens 614, the diffusion sheet mounting frame 615 and the diffusion sheet 613 are arranged sequentially from the bottom up in a cavity formed by the LED fixing seat 612 and the light source module fixing frame 616. The lens 614 is inserted to a lens mounting hole 6163 in the light source module fixing frame 616 to match the lens mounting hole 6163. The diffusion sheet 613 is arranged on a concave surface 6151 of a top part of the diffusion sheet mounting frame 615, and the light source module fixing frame 616 is fixed to a horizontal plane on an inner side of the chassis by screws. In this embodiment, the lens is a flat convex lens with a focal length of 25 millimeters located directly below the diffuser sheet at a distance of 19 millimeters and used to change the light from the light source into a parallel beam. The diffusion sheet is approximately 5 millimeters away from the light source and is used to change a point like LED light source to a straight light source. The aperture is used to adjust the sensitivity of the light source module. A large aperture has a shallow depth of field, while a smaller aperture is advantageous for observing embryo.

In this embodiment, due to the potential impact of blue light on embryo/ovum, the present invention prefers an LED light source with a wavelength of 585 nm.

Although the present invention has been disclosed through the above embodiments, the scope of the present invention is not limited to this. Without departing from the inventive concept, the above components may be replaced with similar or equivalent elements known to those skilled in the art.

## Claims

1. A biochip moving device, wherein the device comprises a rack (1), on which at least one operating unit for pushing a biochip to move is arranged,
a driving mechanism (2), a chip pushing mechanism (3) and a biochip (4) are respectively provided on each of the operating units,
the driving mechanism (2) and the chip pushing mechanism (3) are respectively provided in the rack (1),
the driving mechanism (2) is connected to the chip pushing mechanism (3), and
the chip pushing mechanism (3) pushes the biochip (4) to a target position.

2. The biochip moving device according to claim 1, wherein the rack (1) comprises a baseplate (11), a plurality of supporting baffles (12), a chute plate (13) and a front-panel (14), which are sequentially arranged from the bottom up, the plurality of supporting baffles (12) are fixedly and alternately arranged at intervals between the baseplate (11) and the chute plate (13), respectively, and the front-panel (14) is fixedly arranged above the chute plate (13).

3. The biochip moving device according to claim 1, wherein the driving mechanism (2) is selected from one of a screw driving mechanism, a rack and pinion mechanism, a hinge mechanism, a worm and gear mechanism, and a pneumatic-hydraulic mechanism or a combination thereof.

4. The biochip moving device according to claim 2, wherein an edge of the chute plate (13) is provided with a gap (131).

5. The biochip moving device according to claim 1, wherein the chip pushing mechanism (3) comprises a slider bracket (31) and a hinge assembly (32), a bottom part of the slider bracket (31) is fixedly connected to a movable end of the driving mechanism (2), and an upper part of the slider bracket (31) is rotatably connected to the hinge assembly (32).

6. The biochip moving device according to claim 5, wherein the slider bracket (31) is configured as an I-shape and comprises a sliding seat connecting part (311), an orientating part (312) and a hinge connecting part (313), the sliding seat connecting part (311) is fixedly connected to the movable end of the driving mechanism (2), the orientating part (312) being located in the gap (131) of the chute plate, and the hinge connecting part (313) is a configuration constituted by two side walls of the orientating part (312) extending outwardly.

7. The biochip moving device according to claim 6, wherein the orientating part (312) is configured with a size smaller than width of the gap (131).

8. The biochip moving device according to claim 6, wherein an end part of the hinge connecting part (313) is provided with a first projection (3131) for being matched the hinge assembly (32).

9. The biochip moving device according to claim 8, wherein the chute plate (13) of each of the operating units is provided with a set of symmetrically arranged first chutes (132) and second chutes (133).

10. The biochip moving device according to claim 9, wherein the first chute (132) and the second chute (133) are configured as one of arc, trapezoidal, annular, linear and special shapes or a combination thereof.

11. The biochip moving device according to claim 10, wherein the first chute (132) is provided with a first position (1321) and a second position (1322) for determining a starting position of a movement of a slider.

12. The biochip moving device according to claim 10, wherein the second chute (133) is provided with a third position (1331) and a fourth position (1332) for determining a target position of a movement of a slider.

13. The biochip moving device according to claim 4, wherein a fifth position (1311) and a sixth position (1312) for positioning initial and target positions of the slider bracket (31) are provided within the gap (131).

14. The biochip moving device according to claim 8, wherein the hinge assembly (32) comprises a double-ring connecting rod (321) and a slide bar (322), which are rotationally connected with each other.

15. The biochip moving device according to any one of claims 11-14, wherein a second projection (3221) is provided at a junction of a long side (3224) and a short side (3225) of the slide bar (322), upper and lower surfaces of the other end of the long side (3224) are provided with a third projection (3222) and a fourth projection (3223), respectively, the fourth projection (3223) is slidably connected to the first chute (132), and the second projection (3221) is slidably connected to the second chute (133).

16. The biochip moving device according to claim 15, wherein the double-ring connecting rod (321) comprises a body (3211) and connecting rings (3212, 3213) arranged at both ends of the body, one of the connecting rings (3212) of the double-ring connecting rod (321) is rotationally connected to the first projection (3131) of the hinge connecting part, and the other connecting ring (3213) of the double-ring connecting rod is rotationally connected to the third projection (3222) of the slider bracket.

17. The biochip moving device according to claim 15, wherein the first position (1321) and the third position (1331) are defined as starting positions of the fourth projection (3223) and the second projection (3221), respectively, the second position (1322) and the fourth position (1332) are defined as target positions to be moved to of the fourth projection (3223) and the second projection (3221), respectively, and the fifth position (1311) and the sixth position (1312) are defined as a starting position and a target position of the slider bracket (31) moving within the gap (131).

18. The biochip moving device according to claim 17, wherein when the driving mechanism (2) drives the slider bracket (31) located at the fifth position (1311) to move towards the sixth position (1312), the slider bracket (31) drives the second projection (3221) and the fourth projection (3223) located at the first position (1321) and the third position (1331) on the slide bar (322) through the double-ring connecting rod (321) connected thereto to move to the second position (1322) and the fourth position (1332), so that the short side (3225) of the slide bar (322) pushes the biochip (4) to the target position.

19. The biochip moving device according to claim 17, wherein the driving mechanism drives the slider bracket (31) located at the sixth position (1312) to move towards the fifth position (1311), the slider bracket (31) drives the second projection (3221) and the fourth projection (3223) located at the second position (1322) and the fourth position (1332) on the slide bar through the double-ring connecting rod (321) connected thereto to move to the first position (1321) and the third position (1331).

20. The biochip moving device according to claim 2, wherein a pressing plate assembly (7) for positioning the biochip (4) is further arranged on the front-panel (14), comprising a pressing plate (71) and a plurality of rolling bars (72) which are rotatably mounted at a bottom of the pressing plate (71), respectively.

21. The biochip moving device according to claim 18, wherein two side walls of the biochip (4) are respectively provided with a hanging stand (41) for matching and connecting with the slider bracket (31).

22. The biochip moving device according to claim 2, wherein a substrate inlet and outlet mechanism (5) for automatic inlet and outlet of a substrate is further arranged on the front-panel (14).

23. The biochip moving device according to claim 22, wherein an arc-shape convexity (141) adjacent to the target position is arranged on the front-panel (14), and both sides of the convexity (141) are further respectively provided with a positioning groove (142).

24. The biochip moving device according to claim 23, wherein the substrate inlet and outlet mechanism (5) comprises a motor (51), a motor mounting bracket (52), a panel connecting bracket (53), a gear plate (54), a gear (55), a substrate positioning plate (56) and a substrate (57); the motor mounting bracket (52) is fixedly connected to the panel connecting bracket (53), the motor (51) is mounted on the motor mounting bracket (52) and located between the motor mounting bracket (52) and the panel connecting bracket (53), the gear (55) is rotatably arranged at an output end of the motor (51), the gear (55) is movably connected to the gear plate (54), one side of the substrate positioning plate (56) is fixedly connected to the gear plate (54), and the other side of the substrate positioning plate (56) is detachably connected to the substrate (57).

25. The biochip moving device according to claim 24, wherein the positioning groove (142) is provided with a seventh position (1421) for determining a starting position of a movement of the gear plate (54) and an eighth position (1422) for determining a target position of the movement of the gear plate (54).

26. The biochip moving device according to claim 25, wherein the gear plate (54) is provided with toothed racks (541) in a lengthwise direction.

27. The biochip moving device according to claim 26, wherein the toothed racks (541) of the gear plate engage with the gear (55), and when the motor drives the gear to rotate counterclockwise, the gear drives the gear plate and the substrate positioning plate and the substrate (57) connected thereto to move from the seventh position (1421) to the eighth position (1422), respectively; and when the motor drives the gear to rotate clockwise, the gear drives the gear plate and the substrate positioning plate and the substrate connected thereto to move from the eighth position (1422) to the seventh position (1421), respectively.

28. The biochip moving device according to claim 24, wherein the substrate positioning plate (56) comprises a body (561), a fixing slot (562) at one end of the body, and an L-shaped bend (563) at the other end of the body (561), the fixing slot (562) is adaptively connected with the arc-shape convexity (141) of the front-panel, and the L-shape bend (563) stand against one end of the gear plate (54).

29. The biochip moving device according to claim 28, wherein the substrate positioning plate (56) is further symmetrically provided with two stoppers (564) for positioning the substrate.

30. The biochip moving device according to claim 29, wherein the gear plate (54) is fixedly connected to the substrate positioning plate (56) by screws penetrating through the positioning groove (142).

31. The biochip moving device according to claim 1, wherein the device further comprises an optical system (6) which is provided at a bottom part of the rack, the optical system (6) comprises a light source module (61), an objective lens (62), an optical assembly (63), a camera (64) and a lifting module (65), the lifting module (65) is arranged at a bottom part of the optical system, a movable end of the lifting module is connected to the optical assembly (63), and the lifting module is configured to drive the optical assembly upward and downward to adjust a focal length; the objective lens (62) and the camera (64) are arranged at a light inlet and outlet of the optical assembly (63), respectively, the objective lens (62) is configured to collect and magnify an optical image of an embryo/ovum, and the light source module (61) is fixed on a chassis and located directly above the objective lens (62).

32. The biochip moving device according to claim 31, wherein the light source module (61) and the objective lens (62) are coaxial.

33. The biochip moving device according to claim 31, wherein the optical assembly (63) comprises a first reflecting mirror fixing box (631), a first reflecting mirror (632), a first fixing tube of tube mirror (633), a tube mirror (634), a second fixing tube of tube mirror (635), a second reflecting mirror fixing box (636), a second reflecting mirror (637) and a camera adapter (638), the tube mirror (634) is coaxial with the first fixing tube of tube mirror (633) and the second fixing tube of tube mirror (635), respectively, the tube mirror (634) is arranged at an internal juncture of the first fixing tube of tube mirror (633) and the second fixing tube of tube mirror (635), and the tube mirror (634) is configured to image the optical image collected by the objective lens onto a photosensitive element of the camera.

34. The biochip moving device according to claim 33, wherein the first reflecting mirror (632) is fixed in the first reflecting mirror fixing box (631) and located directly below the objective lens (62) and at an angle of 45 degrees to the objective lens (62).

35. The biochip moving device according to claim 34, wherein the first reflecting mirror fixing box (631) is in threaded connection with the objective lens (62) located above the same.

36. The biochip moving device according to claim 33, wherein a longitudinal open end of the first reflecting mirror fixing box (631) is a light inlet and a transverse open end thereof is a light outlet; and a transverse open end of the second reflecting mirror fixing box (636) is a light inlet and a longitudinal open end thereof is a light outlet.

37. The biochip moving device according to claim 33, wherein one end of the camera adapter (638) is provided with an external thread (6381), the other end thereof is provided with an annular groove (6382), the second reflecting mirror fixing box (636) with two threaded holes (6361) for fixing the camera adapter is fastened to the annular groove (6382) of the camera adapter (638), and the camera (64) is located directly above the camera adapter (638) and in threaded connection with the camera adapter (638).

38. The biochip moving device according to claim 33, wherein the second reflecting mirror (637) is fixed in the second reflecting mirror fixing box (636), the second reflecting mirror (637) is at an angle of 45 degrees to center axes of the first fixing tube of tube mirror (633) and the second fixing tube of tube mirror (635), respectively, and the second reflecting mirror (637) is configured to reflect an optical signal onto the photosensitive element of the camera located above.

39. The biochip moving device according to claim 31, wherein the light source module (61) comprises an LED light source (611), an LED fixing seat (612), a diffusion sheet (613), a lens (614), a diffusion sheet mounting frame (615) and a light source module fixing frame (616), the LED fixing seat (612) and the light source module fixing frame (616) are fixedly connected, the LED light source (611) is mounted on a top part of the LED fixing seat (612), the lens (614), the diffusion sheet mounting frame (615) and the diffusion sheet (613) are arranged sequentially from bottom to top in a cavity formed by the LED fixing seat (612) and the light source module fixing frame (616), the lens (614) is inserted to a lens mounting hole (6163) in the light source module fixing frame (616) to match with the lens mounting hole (6163), the diffusion sheet (613) is arranged on a concave surface (6151) of a top part of the diffusion sheet mounting frame (615), and the light source module fixing frame (616) is fixed to a horizontal plane on an inner side of the chassis by screws.
